# EUROPEAN PATENT APPLICATION

(11) **EP 4 852 149 A1**
(43) Date of publication of application: **09.12.2026**
(21) Application number: 25181310.1
(22) Date of filing: 06.06.2025
(51) Int. Cl.: H01M 10/647, H01M 10/6557, H01M 50/242

(54) **DEVICE FOR THERMAL MANAGEMENT OF BATTERIES**

(71) Applicant: Röchling Automotive SE, 68165 Mannheim (DE)
(72) Inventor: Montaruli, Mariagrazia, 70037 Ruvo di Puglia (IT); Civetta, Fabrizio, 39040 Montagna (IT)
(74) Representative: Ullrich & Naumann PartG mbB

(57) **Abstract**

The invention relates to a device for thermal management of battery cells, preferably prismatic battery cells, comprising a first surface for arranging on a battery cell surface, preferably a side surface of a battery cell and a second surface, wherein said first surface and said second surface are arranged at a distance to each other and wherein between the first surface and the second surface a thermal management channel is formed for delivery of a thermal management fluid, preferably a cooling fluid, and wherein between the first surface and the second surface a swelling compensation structure is arranged wherein said swelling compensation structure comprises at least one elastic element, which is formed such that the at least one elastic element is elastically deformed upon a deformation of the first surface due to a deformation of the battery cell surface.

## Description

The invention relates to a device for thermal management of battery cells, preferably prismatic battery cells, comprising a first surface for arranging on a battery cell surface, preferably a side surface of a battery cell, and a second surface, wherein said first surface and said second surface are arranged at a distance to each other and wherein between the first surface and the second surface a thermal management channel is formed for delivery of a thermal management fluid, preferably a cooling fluid.

The invention further relates to a battery, comprising at least one battery cell and a device for thermal management of battery cells.

Devices for thermal management of battery cells are for instance known from
EP 4 401 201 A1 disclosing a thermal management component being configured to exchange heat with a battery cell. The thermal management component is provided with an avoidance structure configured to provide a space for expansion of the battery cell. The thermal management component can exchange heat with the battery cell to effectively manage heat of the battery cell, such that the battery cell operates within a proper temperature range, improving the cycling performance of the battery. The thermal management component is provided with the avoidance structure made of aluminum to provide the space for expansion of the battery cell, thereby reducing pressure between the battery cell and the thermal management component, reducing the risk of breakage of the thermal management component, improving the cycling performance of the battery cell, and improving the safety.

However, one of the disadvantages is that aluminum is too stiff to provide an effective avoidance structure. One of the further disadvantages is the high cost for manufacturing of the avoidance structure.

One of the goals of the present invention is therefore to provide a device for thermal management of a battery and a battery which allow on the one hand for an enhanced thermal management efficiency and on the other hand allow for an efficient swelling compensation, in particular without the use of swelling compensation packs or pads.

One of the further goals of the present invention is to provide an alternative device for thermal management of a battery and an alternative battery.

The afore mentioned goals may be achieved by an embodiment of the present invention providing a device for thermal management of battery cells, preferably prismatic battery cells, comprising a first surface for arranging on a battery cell surface, preferably a side surface of a battery cell and a second surface, wherein said first surface and said second surface are arranged at a distance to each other and wherein between the first surface and the second surface a thermal management channel is formed for delivery of a thermal management fluid, preferably a cooling fluid, and wherein between the first surface and the second surface a swelling compensation structure is arranged wherein said swelling compensation structure comprises at least one elastic element, which is formed such that the at least one elastic element is elastically deformed upon a deformation of the first surface due to a deformation of the battery cell surface.

The afore mentioned goals may be achieved by an embodiment of the present invention providing a battery, comprising at least one battery cell and a device according to one of the claims 1-14, wherein said at least one battery cell is in thermal contact with said second surface of said device.

One of the advantages that may be achieved by embodiments of the present invention is a compensation of a swelling of a battery and a thermal function for a battery allowing for a reduced construction space. One of the further advantages that may be achieved by embodiments of the present invention is a lightweight and cost-efficient device. One of the further advantages that may be achieved by embodiments of the present invention is an enhanced flexibility since for instance the further functions like fixation of battery cells can be easily implemented.

Further features, advantages and preferred embodiments are disclosed or may be come apparent in the following.

According to a preferred embodiment, said second surface is formed such to be arranged on a battery cell surface, preferably a side surface of a battery cell. This allows for a compact arrangement of a plurality of battery cells and devices for thermal management.

According to a further preferred embodiment, one of the first and second surface comprises a metal and wherein the other of the first and second surface comprises plastics. This allows for an enhanced flexibility on the one hand and provides a lightweight and easy-to-manufacture device on the other hand.

According to a further preferred embodiment, the swelling compensation structure comprises plastics and/or metal, preferably wherein the swelling compensation structure is made of plastics. One of the advantages is that an efficient and lightweight swelling compensation structure can be provided. Another advantage may be the enhanced flexibility since for instance the plastic part can be easily formed according to different requirements. The wording 'plastics' comprises in particular thermoplastics and thermoset materials, like silicone.

According to a further preferred embodiment the surface comprising metal is connected to the swelling compensation structure via plastic-metal-adhesion. This provides a reliable connection between two different materials of the device.

According to a further preferred embodiment said swelling compensation structure comprises a plurality of elastic elements, preferably wherein said elastic elements are identical and are arranged in a non-regular manner between the first and second surface, preferably along the extension parallel to the first and second surface within the thermal management channel. One of the advantages may be that a reliable swelling compensation can be provided. Even further due to a non-regular arrangement of the elastic elements different swelling behavior along the main axis of extension of a battery cell can be taken into account. In case of many identical elastic elements a regular arrangement is also an option.

According to a further preferred embodiment said at least one elastic element extends between the first and second surface and is attached to them, and wherein said at least one elastic element comprises in its extension between the first and second surface a) an angled portion deviating from 90 degree with respect to at least one of the first and second surface and/or b) an elastomer, preferably arranged between two boundary elements extending perpendicular with respect to at least one of the first and second surface. One of the advantages may be that a simple, reliable and elastic swelling compensation structure can be provided. For instance, option a) allows for a simple reversible compression by bending of the angled portion, whereas option b) allows for a simple arrangement. In case of an elastomer the angled portions can be perpendicular to the first or second surface of the device for thermal management, e.g. a cooler, in other cases they are preferably not perpendicular.

According to a further preferred embodiment said at least one elastic element has a symmetric cross-section. This may allow for an easy and cost-effective manufacture.

According to a further preferred embodiment at least one of the first and second surface is flat, preferably wherein one of the first and second surface has an L-shaped cross-section. This allows for an additional mechanical support for a battery cell, when positioned adjacent to the surface L-shaped in cross-section.

According to a further preferred embodiment the surface of the first and second surface comprising a metal has said L-shaped cross-section for covering at least two different surfaces of a battery cell. This allows for an additional reliable mechanical support for a battery cell, when positioned adjacent to the surface L-shaped in cross-section. An L-shaped cross-section allows a better surface coverage of the battery cell and therefore a better heat exchange surface.

According to a further preferred embodiment said swelling compensation structure comprises a structural enhancing element, arranged parallel to the first and second surface and connected to said at least one elastic element, preferably wherein said structural enhancing element is equidistantly arranged between said first and second surface. This may provide a structural enhancement for the elastic elements and a coupling between two or more of the elastic elements. For instance, the structural enhancing element could be connected to all elastic elements or only to part of the elastic elements. Further the structural enhancing elements could connect for example groups of two, three, four or any other number of adjacent elastic elements with no connection between these groups.

According to a further preferred embodiment said first surface and/or said second surface is provided in form of a thin layer connected to the swelling compensation structure. A thin layer combined with the elastic elements allows for a further reduced weight and an enhanced swelling compensation as well as an enhanced thermal contact.

According to a further preferred embodiment said thin layer is laminated with or bonded to said swelling compensation structure. This may allow for a reliable and cost-efficient connection.

According to a further preferred embodiment said swelling compensation structure provides a plurality of thermal management channels, spaced apart by said at least one elastic element. This enhances the thermal management of the battery cells, since for instance turbulences can be improved in that more turbulences allow more heat exchange.

There are several ways how to design and further develop the teaching of the present invention in an advantageous way. To this end, it is to be referred to the patent claims subordinate to the independent claims on the one hand and to the following explanation of further embodiments of the invention by way of example, illustrated by the figures on the other hand. In connection with the explanation of the further embodiments of the invention by the aid of the figures, generally further embodiments and further developments of the teaching will be explained.

In the drawings
- Fig. 1: shows a cross-section of a battery and a device for thermal management according to an embodiment of the present invention;
- Fig. 2: shows the battery and the device for thermal management according to Fig. 1 in case of a battery cell swelling;
- Fig. 3: shows a device for thermal management according to an embodiment of the present invention; and
- Fig. 4: shows a device for thermal management according to an embodiment of the present invention.

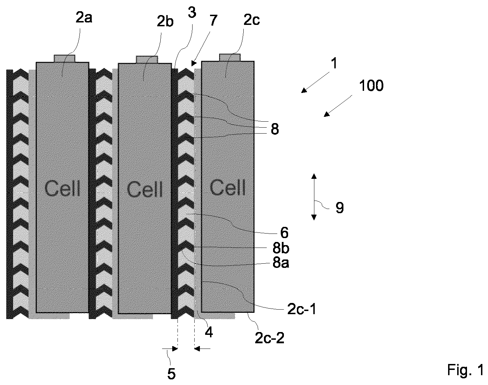

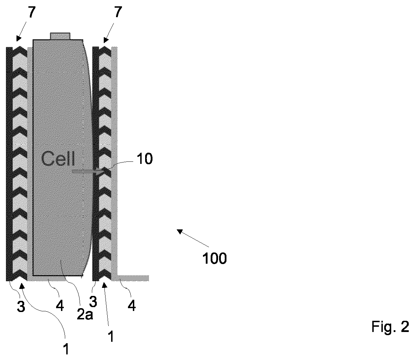

Figure 1 shows a cross-section of a battery and a device for thermal management according to an embodiment of the present invention and Figure 2 shows the battery and the device for thermal management according to Figure 1 in case of a battery cell swelling.

In Figure 1 a battery 100 comprising a plurality of prismatic battery cells 2a, 2b, 2c is shown. Between each two adjacent battery cells 2a, 2b, 2c a device for thermal management 1 is arranged. In the following reference is made to the device 1 between the two battery cells 2b, 2c. The device 1 has two side surfaces 3, 4 wherein the first side surface 3 is flat and extends parallel to a side surface of the left battery cell 2b and the second side surface 4 has an L-shaped cross-section such that the side surface 2c-1 of the battery cell 2c is parallel to the side surface 4 of the device 1 and the bottom surface 2c-2 is parallel to the smaller part of the L-form of the side surface 4, such that the bottom surface 2c-2 of the battery cell 2c is supported by the smaller part of the L-form of the side surface 4.

The side surfaces 3, 4 of device 1 are arranged parallel to each other and arranged at a distance 5 from each other. Between those two surfaces 3, 4 a swelling compensation structure 7 comprising a plurality of elastic elements 8 is arranged. These elastic elements 8 are compressed and/or bended when - due to a swelling of a battery cell 2a, 2b, 2c, for example shown in Figure 2 - the side surface 3 of the battery cell 2a, 2b, 2c extends in the direction 10 to the device 1. The elastic elements 8 are here arranged in a regular manner between the two side surfaces 3, 4 but can also be arranged in a non-regular and or symmetric manner in a direction 9 parallel to the side surfaces 3, 4. The elastic elements 8 have a saddle roof like cross-section - angled portions 8a, 8b - with their ends being connected to the respective side surface 3, 4. Between the two side surfaces 3, 4 one or more thermal management channels 6 are provided. The elastic elements 8 can be used to provide separate channels 6, reducing for example turbulences of a fluid within the channel(s) 6.

The device 1 can be partly made of metal and of plastic. For instance, the first surface 3 is flat and made of plastic and the second surface 4 is L-shaped and made of a metal, for example aluminum. The elastic elements 8 can also be made of plastic for instance TPE. The metal and plastic parts are joined together by metal plastic adhesion allowing for tight fluid channels 6.

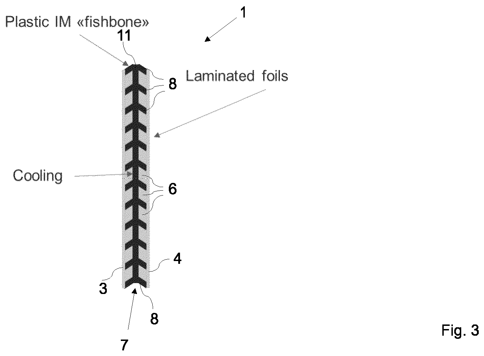

Figure 3 shows a device for thermal management according to an embodiment of the present invention.

In Figure 3 a device for thermal management 1 is shown comprising side surfaces 3, 4 in form of a thin layer, for example laminated foils. In contrast to the swelling compensation structure 7 of figures 1 and 2, the elastic elements 8 are connected via a central rib 11 providing a fish-bone structure.

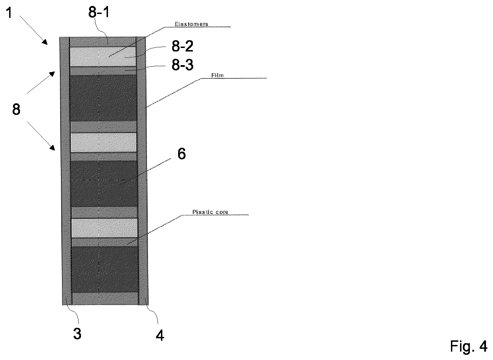

Fig. 4 shows a device for thermal management according to an embodiment of the present invention.

In Figure 4 a device for thermal management 1 is shown comprising side surfaces 3, 4 in form of film layers. In contrast to the swelling compensation structure 7 of figure 3, the elastic elements 8 are arranged perpendicular to the side surfaces 3, 4. The elastic elements 8 comprise two boundary elements 8-1 and 8-3 made of plastic, wherein in between the boundary elements 8-1, 8-3 an elastomer as core 8-2 of the elastic element 8 is provided. Two adjacent but distant elastic elements 8 provide a thermal management channel 6 in between.

At least one embodiment may provide at least one of the following features and/or at least one of the following advantages:
- Easy and less cost-intensive manufacturing.
- Reduced construction space.
- Lower weight and sufficient stiffness.
- Reliable compensation of battery cell deformations.
- High integration level.
- Flexibility in terms of functionality.
- Easy placement of the device respective the battery cells.
- Flexible and sufficient thermal management.

Many modifications and other embodiments of the invention set forth herein will come to mind to the one skilled in the art to which the invention pertains having the benefit of the teachings presented in the foregoing description and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

### List of Reference Signs

- 1: device of thermal management
- 2, 2a, 2b: battery cell
- 2c-1: side surface
- 2c-2: bottom surface
- 3: first surface
- 4: second surface
- 5: distance
- 6: thermal management channel
- 7: swelling compensation structure
- 8: elastic element
- 8a, 8b: angled portion
- 8-1, 8-3: outer boundary
- 8-2: elastomeric core
- 9,10: direction
- 11: rib

- 100: battery

## Claims

1. Device for thermal management (1) of battery cells (2a, 2b, 2c), preferably prismatic battery cells (2a, 2b, 2c), comprising
a first surface (3) for arranging on a battery cell (2a, 2b, 2c) surface, preferably a side surface of a battery cell (2a, 2b, 2c) and
a second surface (4), wherein
said first surface (3) and said second surface (4) are arranged at a distance (5) to each other and wherein
between the first surface (3) and the second surface (4) a thermal management channel (6) is formed for delivery of a thermal management fluid, preferably a cooling fluid, and wherein
between the first surface (3) and the second surface (4) a swelling compensation structure (7) is arranged wherein said swelling compensation structure (7) comprises at least one elastic element (8), which is formed such that the at least one elastic element (8) is elastically deformed upon a deformation of the first surface (3) due to a deformation of the battery cell (2a, 2b, 2c) surface.

2. Device (1) according to claim 1, wherein said second surface (4) is formed such to be arranged on a battery cell (2a, 2b, 2c) surface, preferably a side surface of a battery cell (2a, 2b, 2c).

3. Device (1) according to one of the claims 1-2, wherein one of the first and second surface (3, 4) comprises a metal and wherein the other of the first and second surface (3, 4) comprises plastics.

4. Device (1) according to one of the claims 1-3, wherein the swelling compensation structure (7) comprises plastics and/or metal, preferably wherein the swelling compensation structure (7) is made of plastics.

5. Device (1) according to claim 3 and 4, wherein the surface comprising metal is connected to the swelling compensation structure (7) via plastic-metal-adhesion.

6. Device (1) according to one of the claims 1-5, wherein said swelling compensation structure (7) comprises a plurality of elastic elements (8), preferably wherein said elastic elements (8) are identical and are arranged in a non-regular manner between the first and second surface (3, 4), preferably along the extension (9) parallel to the first and second surface (3, 4) within the thermal management channel (6).

7. Device (1) according to one of the claims 1-6, wherein said at least one elastic element (8) extends between the first and second surface (3, 4) and is attached to them, and wherein said at least one elastic element (8) comprises in its extension between the first and second surface (3, 4) a) an angled portion (8a, 8b) deviating from 90 degree with respect to at least one of the first and second surface (3, 4) or b) an elastomer, preferably arranged between two boundary elements (8-1, 8-3) extending perpendicular with respect to at least one of the first and second surface (3, 4).

8. Device (1) according to claim 7, wherein said at least one elastic element (8) has a symmetric cross-section.

9. Device (1) according to one of the claims 1-8, wherein at least one of the first and second surface (3, 4) is flat, preferably wherein one of the first and second surface (3, 4) has an L-shaped cross-section.

10. Device (1) according to claim 9, wherein the surface of the first and second surface (3, 4) comprising a metal has said L-shaped cross-section for covering at least two different surfaces of a battery cell (2a, 2b, 2c).

11. Device (1) according to one of the claims 1-10, wherein said swelling compensation structure (7) comprises a structural enhancing element, arranged parallel to the first and second surface (3, 4) and connected to said at least one elastic element (8), preferably wherein said structural enhancing element (11) is equidistantly arranged between said first and second surface (3, 4).

12. Device (1) according to one of the claims 1-11, wherein said first surface (3) and/or said second surface (4) is provided in form of a thin layer connected to the swelling compensation structure (7).

13. Device (1) according to claim 12, wherein said thin layer is laminated with or bonded to said swelling compensation structure (7).

14. Device (1) according to one of the claims 1-13, wherein said swelling compensation structure (7) provides a plurality of thermal management channels (6), spaced apart by said at least one elastic element (8).

15. Battery (100), comprising at least one battery cell (2a, 2b. 2c) and a device (1) according to one of the claims 1-14, wherein said at least one battery cell (2a, 2b, 2c) is in thermal contact with said second surface (4) of said device.
